# EUROPEAN PATENT SPECIFICATION

(11) **EP 2 532 542 B1**
(45) Date of publication and mention of the grant of the patent: **24.09.2014**
(21) Application number: 12170418.3
(22) Date of filing: 01.06.2012
(51) Int. Cl.: B60H 1/00, B60H 3/06

(54) **Air duct**
Luftleitung
Conduit d'air

(30) Priority: 10.06.2011 GB 201109699
(43) Date of publication of application: 12.12.2012
(73) Proprietor: AGCO International GmbH, 8212 Neuhausen am Rheinfall (CH)
(72) Inventor: Geiss, Hermann, 87616 Marktoberdorf (DE)
(74) Representative: AGCO Intellectual Property Department

(56) References cited:
- EP-A1- 1 306 250
- DE-A1- 4 419 626
- DE-A1- 10 249 110
- US-A- 6 129 140

## Description

This invention relates to an air duct into which an air filter can be inserted. More specifically, the invention relates to an air duct for use with a heating/cooling system.

Heating and cooling systems, for example those which are mounted on a vehicle use air ducts, for many purposes for example re-circulation ducts. The air entering such a duct must be filtered as it enters the duct. The filter must be mounted so that it can be easily removed from the duct for cleaning and replacement.

It is known to insert a filter into an opening of an air duct in which sealing means is fitted between the perimeter of the filter and the opening of the air duct to prevent air flowing into the air duct without passing through the filter.

Since the air ducts are made from a blow moulded plastics material, the walls of the duct are usually thin and lightweight and therefore to support a filter mounted in the duct is problematic. Sealing is used between the filter and the wall of the duct however the walls which support the filter are weakened by the filter being pulled in and out. As soon as the walls weaken the sealing no longer works. In some cases the walls of the opening are strengthened by using additional elements which lie between the sealing and the filter. The filter must then be attached to these elements which has cost and assembly time implications.

Document DE 102 49 110 A1, which is considered as the closest prior art, discloses an air duct on one side of a wall, comprising a recess for receiving a filter, said recess being formed by a separate mouting frame arrangement which clamps a filter to the opposite side of the wall. Therefore, mounting the filter involves an additional element.

It is an aim of the present invention to provide an alternative air duct which attempts to alleviate the problems set out above.

Accordingly there is provided an air duct in accordance with claim 1. Preferred features of the invention are set out in the dependent claims.

With this invention, a filter can be directly attached and sealed to the air duct which overcomes tolerance problem associated with any further parts which are used to mount a filter within the duct.

The invention will now be described, by way of example only, with reference to the following drawings in which:
Figure 1 is a perspective view of an air duct in accordance with the invention,
Figure 2 is a cross sectional view along line A-A of figure 1, and
Figure 3 is a close up view of the area A of figure 2.

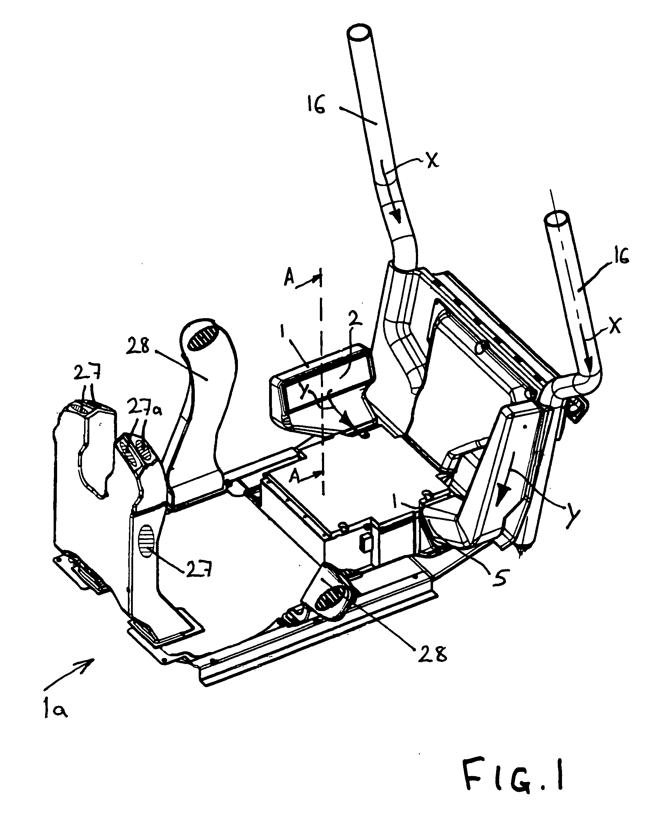

Figure 1 is a perspective view of a lower part of vehicle a cab 1a which is fitted with air canals 16, 27 and 28 and air ducts 1 for connection to an HVAC system-mounted in the cab. Air ducts 1 are used as recirculation ducts, air canals 27 and 28 are air distributors. External air is fed to the HVAC system through air canals 16 in the direction indicated by arrows X. Air from the cab 1a is also fed to the HVAC system through recirculation ducts 1 in the direction indicated by arrows Y. Air duct 1 is provided with an opening 2 at one end into which a filter 5 is fitted. The other end of the duct 1 is connected to the HVAC system. Air from the cab 1a is drawn through filter 5, flows through duct 1 and into the HVAC system.

Air duct 1 may be made from blow moulded plastics material. Air duct 1 could easily be a different duct, such as an air vent, air distributor or fresh air intake and is not restricted for use with a heating/cooling system.

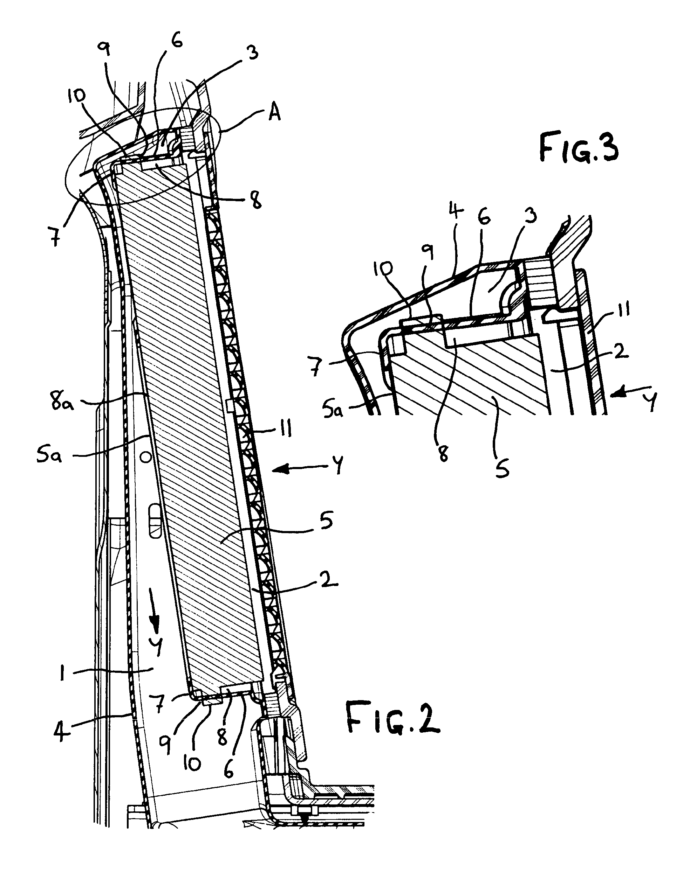

Figure 2 is a cross sectional view of the opening of figure 1 along line A-A.

Duct 1 is a hollow member defined by a wall 4 and manufactured by blow moulding. The part of duct 1 shown in figure 2 can be best described as a closed end cylinder from which a section of the wall 4 has been pushed inwards forming an opening 2 which leads into the duct. A part of the wall 6 around the opening extends into the duct. Wall part 6 may be tapered inwards. A part of wall is removed to form a central aperture 8a through to duct 1 so that air can pass through the opening 2 and into the duct 1.

Duct 1 is shown with a filter 5 fitted. Air is drawn through filter 5 and flows through the duct 1 as indicated by arrows Y. At an upper part A of the duct 1, wall 4 is of a double layer structure comprising two walls with a gap 3 inbetween. When central aperture 8a is formed, element 7 which extends at right angles to the wall part 6 is left behind. Element 7 and wall part 6 form a recess 8 for supporting filter 5. The recess can be accessed through opening 2. Wall part 6 is the same length as the breadth of filter 5 so that when the filter is in the recess 8 a part of the rear wall 5 a of the filter abuts with element 7 preventing further movement of the filter into the duct 1.

Wall part is provided with a slot 9 around its perimeter. Filter 5 is provided with a sealing means 10 around its perimeter. As filter 5 is pushed into the recess 8, sealing means 10 is pushed through slot 9 sealing and holding the filter within the recess. Owing to the compression of the sealing means 10 and the friction between the surfaces of the filter and the surfaces defining the recess, the filter is fixed firmly within the recess 8.

A cover 11 is provided over filter 5 and is connected to wall 4 to protect the filter.

The invention provides a stiff duct which is reinforced towards the upper part A by the double layer structure. Since wall part 6 extends into the duct the same distance as the breadth of the filter, the duct offers good support to the filter. Element 7 also provides support to the filter and prevents movement of the filer further into the duct.

In the shown embodiment, duct 1 is made by blow-moulding technology. It is envisaged that any other method used to form a hollow plastic part in one manufacturing step, e.g. rotational moulding, may be used.

The central aperture 8a defined by element 7 may be rectangular in shape. Element 7 may be provided with stiffening connectors connecting opposing sides of element 7 across aperture 8a to strengthen element 7 and wall part 6.

Where the duct 1 is made of a stiff material, element 7 may be reduced in length to increase the size of aperture 8a. This increases the air flow from the filter 5 into the duct 1.

## Claims

1. An air duct (1) comprising a recess (8) for receiving a filter (5), the duct (1) having a wall (4), **characterized in that** a part (6) of the wall extends into the duct (1) and sait wall part (6) is provided with an element (7) which extends perpendicular to the wall part (6), and wherein said element (7) and said wall part (6) define said recess (8) within the duct for receiving a filter (5), said recess (8) having an aperture through to the duct (1), wherein when a filter (5) is fitted, said element (7) abuts with the filter (5) and said wall part (6) engages with a sealing means (10) associated with the filter (5).

2. An air duct (1) as claimed in any preceding claim wherein the part (6) of the wall extending into the duct is the same length as the width of the filter (5).

3. An air duct (1) as claimed in any preceding claim wherein the part (6) of the wall extending into the duct is provided with a slot (9) for receiving a sealing means (10) connected to the filter.

4. An air duct (1) as claimed in any preceding claim wherein the air duct (1) is made by a single step manufacturing process.

5. An air duct (1) as claimed in any preceding claim wherein the air duct (1) is made from blow moulding or rotational moulding.

6. An air duct (1) as claimed in any preceding claim wherein the duct (1) is provided with a second wall to reinforce the recess (8).

7. An air duct (1) as claimed in claim 6 wherein the recess (8) is provided with a cover (11) and said cover (11) is connected to the wall (4) and/or the second wall of the air duct.

8. An air duct (1) as claimed in any preceding claim, wherein said filter (5) is provided with a sealing means (10) around its outer perimeter.

## Patentansprüche

1. Luftleitung (1) mit einer Ausnehmung (8) zur Aufnahme eines Filters (5), wobei die Luftleitung (1) eine Wandung (4) besitzt, **dadurch gekennzeichnet, dass** sich ein Teil (6) der Wandung in die Luftleitung (1) erstreckt und der Teil (6) der Wandung mit einem Element (7) ausgestattet ist, welches sich senkrecht zu dem Teil (6) der Wandung erstreckt, und wobei das Element (7) und der Teil (6) der Wandung die Ausnehmung (8) in der Luftleitung zur Aufnahme eines Filters (5) definieren oder begrenzen, wobei die Ausnehmung (8) eine Öffnung zu der Luftleitung (1) besitzt und, wenn ein Filter (5) eingesetzt oder eingepasst ist, das Element (7) an den Filter (5) anstößt oder angrenzt und der Teil (6) der Wandung in Wechselwirkung tritt mit einem Dichtorgan (10), welches dem Filter (5) zugeordnet ist.

2. Luftleitung (1) nach einem der vorhergehenden Ansprüche, wobei der Teil (6) der Wandung, welcher sich in die Luftleitung erstreckt, dieselbe Länge besitzt wie die Breite des Filters (5).

3. Luftleitung (1) nach einem der vorhergehenden Ansprüche, wobei der Teil (6) der Wandung, welcher sich in die Luftleitung erstreckt, mit einem Schlitz (9) zur Aufnahme eines mit dem Filter verbundenen Dichtorgans (10) ausgestattet ist.

4. Luftleitung (1) nach einem der vorhergehenden Ansprüche, wobei die Luftleitung (1) in einem Herstellungsprozess mit einem einzigen Verfahrensschritt hergestellt ist.

5. Luftleitung (1) nach einem der vorhergehenden Ansprüche, wobei die Luftleitung (1) mit Blasformen oder Rotations-Formen hergestellt ist.

6. Luftleitung (1) nach einem der vorhergehenden Ansprüche, wobei die Luftleitung (1) mit einer zweiten Wandung zur Verstärkung der Ausnehmung (8) ausgestattet ist.

7. Luftleitung (1) nach Anspruch 6, wobei die Ausnehmung (8) mit einer Abdeckung (11) ausgestattet ist und die Abdeckung (11) mit der Wandung (4) und/oder der zweiten Wandung der Luftleitung verbunden ist.

8. Luftleitung (1) nach einem der vorhergehenden Ansprüche, wobei der Filter (5) um seinen äußeren Umfang mit einem Dichtorgan (10) ausgestattet ist.

## Revendications

1. Conduit d'air (1) comprenant une cavité (8) destinée à recevoir un filtre (5), le conduit (1) présentant une paroi (4), **caractérisé en ce qu'**une partie (6) de la paroi s'étend dans le conduit (1) et ladite partie de paroi (6) comporte un élément (7) qui s'étend perpendiculairement à la partie de paroi (6), et dans lequel ledit élément (7) et ladite partie de paroi (6) définissent ladite cavité (8) à l'intérieur du conduit afin de recevoir un filtre (5), ladite cavité (8) présentant une ouverture à travers le conduit (1), dans lequel, lorsqu'un filtre (5) est assemblé, ledit élément (7) vient en butée sur le filtre (5) et ladite partie de paroi (6) est couplée à un moyen d'étanchéité (10) associé au filtre (5).

2. Conduit d'air (1) selon la revendication précédente dans lequel la partie (6) de la paroi s'étendant dans le conduit est de la même longueur que la largueur du filtre (5).

3. Conduit d'air (1) selon l'une quelconque des revendications précédentes dans lequel la partie (6) de la paroi s'étendant dans le conduit comporte une fente (9) destinée à recevoir un élément d'étanchéité (10) raccordé au filtre.

4. Conduit d'air (1) selon l'une quelconque des revendications précédentes dans lequel le conduit d'air (1) est réalisé par un processus de fabrication en une seule étape.

5. Conduit d'air (1) selon l'une quelconque des revendications précédentes dans lequel le conduit d'air (1) est réalisé par moulage par soufflage ou par moulage centrifuge.

6. Conduit d'air (1) selon l'une quelconque des revendications précédentes dans lequel le conduit (1) comporte une seconde paroi de manière à renforcer la cavité (8).

7. Conduit d'air (1) selon la revendication 6 dans lequel la cavité (8) comporte un couvercle (11) et ledit couvercle (11) est relié à la paroi (4) et/ou à la seconde paroi du conduit d'air.

8. Conduit d'air (1) selon l'une quelconque des revendications précédentes, dans lequel ledit filtre (5) comporte un moyen d'étanchéité (10) autour de son périmètre externe.
